# EUROPÄISCHE PATENTSCHRIFT

(11) **EP 2 260 071 B1**
(45) Veröffentlichungstag und Bekanntmachung des Hinweises auf die Patenterteilung: **03.06.2015**
(21) Anmeldenummer: 09728607.4
(22) Anmeldetag: 30.03.2009
(51) Int. Cl.: C08J 3/00

(54) **VERFAHREN ZUR HERSTELLUNG EINES GEFÜLLTEN POLYMERMATERIALS**
METHOD FOR PRODUCING A FILLED POLYMER MATERIAL
PROCÉDÉ DE FABRICATION D'UN MATÉRIAU POLYMÈRE CHARGÉ

(30) Priorität: 31.03.2008 AT 5022008
(43) Veröffentlichungstag der Anmeldung: 15.12.2010
(73) Patentinhaber: EREMA Engineering Recycling Maschinen und Anlagen Gesellschaft m.b.H., 4052 Ansfelden (AT)
(72) Erfinder: FEICHTINGER, Klaus, A-4040 Linz (AT); WENDELIN, Gerhard, A-4030 Linz (AT); HACKL, Manfred, A-4040 Linz (AT)
(74) Vertreter: Wildhack & Jellinek
(86) Internationale Anmeldenummer: PCT/AT2009/000127
(87) Internationale Veröffentlichungsnummer: WO 2009/121085

(56) Entgegenhaltungen:
- EP-A- 1 273 412
- EP-A- 1 612 234
- FR-A- 2 626 580
- US-B1- 6 734 234

## Beschreibung

### Gebiet der Erfindung:

Die vorliegende Erfindung betrifft ein Verfahren zur Herstellung eines, mit zumindest einem Füllstoff, vorzugsweise Calciumcarbonat CaCO₃, gefüllten, gegen hydrolytischen Abbau empfindlichen und gegebenenfalls hygroskopischen, thermoplastischen, durch Polykondensation hergestellten Polymermaterials, insbesondere PET, wobei unter Vakuumbedingungen, ständigem Rühren bzw. Durchmischen und erhöhter Temperatur eine Mischung aus noch nicht aufgeschmolzenem, gegebenenfalls erweichtem, Polymermaterial mit dem Füllstoff hergestellt wird, wobei dafür ein zum Zugabezeitpunkt nicht vorgetrockneter Füllstoff mit einer Restfeuchte (H₂0) von mehr als 500 ppm, insbesondere mehr als 1000 ppm, eingesetzt wird bzw. eine Verwendung gemäß Anspruch 13.

### Hintergrund der Erfindung:

Aus dem Stand der Technik sind zahlreiche Kunststoffe bzw. Polymere bekannt, die mit einem Füllstoff, beispielsweise einem inerten mineralischen Pulver, gefüllt sind. Eine Versetzung mit Füllstoff erfolgt zumeist deshalb, um die durchschnittlichen Kosten des Produktes zu senken oder dem Produkt gewisse Eigenschaften zu geben.

Auch sind zahlreiche Verfahren bekannt, mit denen Füllstoffe zu einem Polymer zugemischt werden können. So können die Füllstoffe beispielsweise in eine Kunststoffschmelze zugegeben werden. Weiters besteht die Möglichkeit einer "kalten Mischung", wobei der Kunststoff und die Füllstoffe bei niedrigen Temperaturen miteinander gemischt werden und anschließend die Mischung erwärmt und aufgeschmolzen wird.

Außerdem besteht die Möglichkeit, die Füllstoffe zu einem vorgewärmten, erweichten Polymermaterial zuzugeben und erst in einem weiteren Schritt die Mischung aufzuschmelzen. Ein derartiges Verfahren ist beispielsweise aus der EP 1 401 623 bekannt. Hierbei werden Füllstoffe zu Polyolefinen, wie beispielsweise Polyethylen oder Polypropylen, zugemischt, indem zuerst das Polymermaterial in einen erweichten Zustand gebracht wird und anschließend die Füllstoffe, im vorliegenden Fall Calciumcarbonat, zugegeben werden. Anschließend wird die Mischung aufgeschmolzen bzw. verdichtet.

Auch ist es aus dem Stand der Technik bekannt, durch Polykondensation hergestellte thermoplastische Materialien, sogenannte Polykondensate, insbesondere Polyester, insbesondere PET, mit Füllstoffen, beispielsweise mit Calciumcarbonat, zu versetzen. Derartige gefüllte Polyester werden beilspielsweise als Flaschen eingesetzt.

Bei Polykondensaten, insbesondere bei Polyestern, sind allerdings generell die besonderen Eigenschaften dieser Kunststoffart zu berücksichtigen, die ein Recycling bzw. eine Wiederaufbereitung dieser Kunststoffe heikel und problematisch werden lassen.

Dazu sei erläuternd bemerkt, dass beispielsweise PET in zwei verschiedenen Strukturen vorliegen kann, nämlich in amorpher oder in kristalliner bzw. teilkristalliner Form. Amorphes PET ist zumeist durchsichtig, kristallines PET ist opak oder weiß. Wie bei allen Thermoplasten, die in amorpher oder kristalliner Form vorkommen können, ist auch bei PET ein Kristallinitätsgrad von 100% nicht erreichbar. Lediglich ein Teil der Struktur des PET ist in der Lage, sich zu orientieren, also zu kristallisieren. Kristalline und amorphe Bereiche wechseln sich ab, korrekterweise ist somit von einer Teilkristallinität zu sprechen. Bei PET ist es möglich, einen Kristallinitätsgrad von etwa 50% zu erreichen. Dies bedeutet, dass sich in diesem Zustand die Hälfte der Molekülketten zueinander orientiert hat, sich also parallel nebeneinander gelegt oder kreisförmig aufgewickelt hat. Zwangsläufig werden also in den teilkristallinen Gebieten die Wechselwirkungen, insbesondere van-der-Waals Kräfte zwischen den Molekülketten größer. Die Ketten ziehen sich also gegenseitig an, und damit werden die Zwischenräume zwischen den Molekülketten kleiner.

Die molekulare Struktur von PET kann allerdings durch bestimmte Faktoren zerstört werden.

Ein erster Abbaumechanismus wird durch thermischen Abbau der Molekülketten bewirkt. Dabei werden die Bindungen zwischen den einzelnen Molekülen durch zu große Erwärmung zerstört. Aus diesem Grund ist eine entsprechende Verweilzeit und eine geeignete Bearbeitungstemperatur zu beachten, um ein qualitativ hochwertiges Produkt zu erzielen.

Ein zweiter relevanter Abbaumechanismus ist der hydrolytische Abbau, d.h. PET ist, so wie anderer Polykondensate, anfällig gegenüber Wasser bzw. Feuchtigkeit:
Das Wasser bzw. die Feuchtigkeit kommt im wesentlichen aus zwei Quellen: Einerseits hat PET eine hygroskopische Struktur, d.h. PET absorbiert die Feuchtigkeit. Diese wird in den intermolekularen Zwischenräumen eingelagert und verbleibt als sogenannte innere Feuchte im Polymer selbst bzw. in dessen Inneren. Die innere Feuchte des originären Polymers ist abhängig von den jeweiligen Umgebungsbedingungen. PET hat eine gewisse innere Gleichgewichtsfeuchte, die in den gemäßigten Breiten bei ca. 3000 ppm liegt.

Außerdem liegt zusätzliche Feuchtigkeit an der äußeren Oberfläche des Polymers bzw. der Polymerflakes vor (äußere Feuchte), die bei der Bearbeitung ebenfalls beachtet werden muss.

Ist bei der Bearbeitung bzw. während des Recyclings oder der Extrusion von PET zuviel Feuchtigkeit vorhanden - egal aus welcher Quelle -, werden die Polymerketten des PET hydrolytisch gespalten und es werden in einer chemischen Reaktion teilweise wieder die Ausgangsprodukte, nämlich Terephtalsäure und Ethylenglykol gebildet. Dieser hydrolytische Abbau der Kettenlänge der Moleküle führt zu einem starken Viskositätsabbau sowie einer Verschlechterung der mechanischen Eigenschaften des Endproduktes bzw. zu nachteiligen Veränderungen der Kunststoffeigenschaften. Die Schädigung kann sogar so hoch sein, dass sich das Material nicht mehr für die Verarbeitung von Flaschen, Folien etc. verwenden lässt.

Polyester ist vor allem bei erhöhter Temperatur besonders empfindlich auf Feuchtigkeit, vor allem Polymerschmelzen bei ca. 280°C reagieren extrem schnell mit Wasser und PET wird innerhalb von Sekunden abgebaut. Um PET beim Recycling wieder aufzubereiten, muss dem Material allerdings notwendigerweise Energie in Form von Wärme zugeführt werden, insbesondere bei der abschließenden Extrusion.

Um das Polykondensat somit vor hydrolytischem Abbau zu schützen und die Polymerketten zu erhalten, muss dem Material vor der Wiederaufbereitung bzw. vor einer zu starken Erhöhung der Temperatur möglicht alle Feuchtigkeit entzogen werden und auf eine geeignete Einstellung der Temperatur und der Verweilzeit während der Bearbeitung geachtet werden.

Soll somit beispielsweise feuchtes PET bearbeitet bzw. aufbereitet werden und wird dieses PET in einen Schneidverdichter eingebracht, so muss durch geeignete Maßnahmen versucht werden, eine hydrolytische Schädigung des Polyesters zu unterbinden. Um ein qualitativ entsprechendes Endprodukt zu erhalten, ist es somit beim Recycling bzw. bei der Bearbeitung von sensiblen Polykondensaten, wie Polyestern, erforderlich, die innere Feuchte sowie die auf der Oberfläche des Kunststoffes anhaftende äußere Feuchte möglichst zu reduzieren. Erst durch eine entsprechende Trocknung, insbesondere unter 100 ppm, hält sich der hydrolytische Abbau in Grenzen.

Dazu stehen verschiedene verfahrenstechnische Möglichkeiten zur Verfügung. So kann beispielsweise versucht werden, die am Kunststoff anhaftende äußere Feuchte durch Anlegen eines Vakuums oder durch Erhöhung der Temperatur zu entfernen.

Dabei müssen allerdings auch andere verfahrenstechnische Probleme berücksichtigt werden. So neigt beispielsweise amorphes und auch teilkristallines PET dazu, bei Erwärmung zu verkleben, was in der Praxis ebenfalls ein großes Problem darstellt. Dieses Problem kann nur durch ständiges Rühren gelöst werden.

Weiters ist darauf zu achten, dass manche Kunststoffsorten anfällig gegenüber oxidativen Abbauprozessen sind, wodurch ebenfalls die Kettenlänge der Kunststoffmoleküle reduziert wird, was ebenfalls nachteilige Veränderungen der Eigenschaften der Kunststoffe, wie z.B. der Farbe, der Festigkeit, etc. zur Folge haben kann. Um wiederum diesen oxidativen Abbau zu verhindern, besteht die Möglichkeit, die Bearbeitung derartiger sensibler Kunststoffe, unter Vermeidung von Luft, z.B. unter Inertgasatmosphäre durchzuführen.

Die effiziente und wirtschaftliche Aufbereitung von Polykondensaten bzw. Polyestern ist somit u.a. aufgrund der zahlreichen Abbauprozesse, die es zu beachten gilt, äußerst problematisch und erfordert eine spezielle Verfahrensführung. Dies alles gestaltet das Recycling von Polykondensaten, insbesondere von Polyestern und ganz insbesondere von PET, besonderes problematisch und heikel, so dass überhaupt erst mit der Entwicklung von speziellen Verfahrensführungen ein wirtschaftliches Recycling derartiger Kunststoffe möglich wurde.

Dies gilt selbstverständlich auch für die Herstellung von mit Füllstoffen gefüllten Polykondensaten bzw. Polyestern. Zusätzlich ist bei gefüllten Polykondensaten allerdings zu berücksichtigen, dass nicht nur über das Polymer, sondern auch durch die Füllstoffe selbst große Mengen an zusätzlicher Feuchtigkeit eingebracht werden, die sich negativ auf die Kettenlänge auswirkt. So besitzt beispielsweise Calciumcarbonat eine sehr große spezifische Oberfläche und bindet große Mengen an Feuchtigkeit, und zwar über 1000 ppm bei 20° und 60% Luftfeuchte.

Mit den gängigen, aus dem Stand der Technik bekannten Verfahren ist es bislang zwar möglich, die vom Polymermaterial eingebrachte äußere und innere Feuchte einigermaßen effektiv zu entfernen, wird allerdings noch zusätzlich weitere Feuchtigkeit über den Füllstoff in großer Menge eingebracht, so führt dies zu Schwierigkeiten und das Verfahren wird schnell unwirtschaftlich bzw. die Qualität der erhaltenen Produkte, d.h. der gefüllten Polymere, sinkt.

Dieses Problem wird in der Praxis dadurch gelöst, dass die Füllstoffe vor ihrer Zugabe in einem separaten Verfahren vorgetrocknet werden. Die Trocknung eines pulverförmigen Füllstoffes ist allerdings ausgesprochen schwierig, aufwändig und teuer. Aufgrund der oben erwähnten Probleme betreffend des hydrolytischen Abbaus des Polymers ist es bislang in der Praxis jedoch eine absolute Notwendigkeit, eine derartige Vortrocknung durchzuführen, da ansonsten das Polykondensat zu stark abgebaut und die Qualität des Endproduktes sinken würde. Außerdem ist dadurch ein zusätzlicher vorgeschalteter Verfahrenschritt, nämlich die Vortrocknung der Füllstoffe, erforderlich, der das Gesamtverfahrens verlängert.

Alternativ besteht die Möglichkeit, gecoatete Füllstoffe, das heißt Füllstoffe, die oberflächenbeschichtet sind, und deren Oberfläche dadurch entsprechend verkleinert ist, einzusetzen. Derartige gecoatete Füllstoffe binden weniger Wasser und bringen somit weniger Feuchtigkeit in das Kunststoffmaterial ein. Allerdings sind solche gecoateten Füllstoffe ebenfalls wesentlich teurer bzw. auch nur aufwändig herzustellen.

*Aus der* US 6,734,234 B1 *ist ein Verfahren zur Herstellung eines RPET Polymerblends bekannt, wobei die RPET-Flakes auf eine gewisse Parfikelgröße gebracht werden und mit einem speziellen Additiv gemischt werden.*

*In der* EP 1 612 234 A1 *ist ein Verfahren zur Herstellung einer Kunstsfoffmischung aus einem Polyester, einem Polyolefin und einem Compatibilizer durch Extrosion beschrieben, wobei die Mischung aufgeschmolzen wird.*

*In der* FR 2 626 580 *wird ebenfalls die Herstellung eines gefüllte Polymermaterials beschrieben.*

*In der* EP 1 273 412 A1 *wird ein Verfahren beschrieben, bei dem die Polymere zunächst in einem Behälter gemischt und erweicht werden und anschließend ein Füllstoff zugegeben wird.*

*In keiner dieser Druckschriften sind Angaben zur Restfeuchte der Füllstoffe enthalten.*

### Zusammenfassung der Erfindung:

Die vorliegende Erfindung hat es sich somit zur Aufgabe gestellt, ein Verfahren zur Herstellung eines gefüllten, hygroskopischen und gegen hydrolytischen Abbau empfindlichen, Polykondensats, insbesondere PET, zu schaffen, das qualitativ hochwertige Endprodukte liefert und gleichzeitig rasch und wirtschaftlich effizient durchführbar ist.

Diese Aufgabe wird gelöst, indem ein Verfahren zur Herstellung eines, mit zumindest einem Füllstoff, vorzugsweise Calciumcarbonat CaCO₃, gefüllten, gegen hydrolytischen Abbau empfindlichen und gegebenenfalls hygroskopischen, thermoplastischen, durch Polykondensation hergestellten Polymermaterials, insbesondere PET, vorgesehen wird, wobei unter Vakuumbedingungen, ständigem Rühren bzw. Durchmischen und erhöhter Temperatur eine Mischung aus noch nicht aufgeschmolzenem, gegebenenfalls erweichtem, Polymermaterial mit dem Füllstoff hergestellt wird, wobei dafür ein zum Zugabezeitpunkt nicht vorgetrockneter *Füllstoff* mit einer Restfeuchte (H₂0) von mehr als 500 ppm, insbesondere mehr als 1000 ppm, eingesetzt wird.

Es hat sich durch Versuche überraschenderweise gezeigt, dass mit dem erfindungsgemäßen Verfahren hygroskopische sowie gegen hydrolytischen Abbau empfindliche Polykondensate, insbesondere PET, ohne negative Auswirkungen auf die Kettenlänge, auch mit nicht vorgetrockneten Rohfüllstoffen, sogar mit einer Restfeuchte von mehr als 500 ppm, versetzt bzw. gefüllt werden können.
Wie oben festgestellt, müssen bei der heiklen Aufbereitung bzw. Behandlung von Polykondensaten, insbesondere bei PET, im Vergleich zu Polyolefinen oder anderen Kunststoffen, gleich mehrere Besonderheiten beachtet werden, die die Bearbeitung von Polykondensaten zu einem ganz speziellen Verfahren macht. Die erfindungsgemäße Verfahrensführung ist dabei, bei entsprechender Verweilzeit, so zu gestalten, dass das Verfahren unter Vakuum, erhöhter Temperatur sowie ständigem Rühren geführt wird.
Die genauen Parameter hängen vom Polymermaterial ab: Die Temperatur bewegt sich allerdings etwa zwischen 110° bis 240°C, die Umfangsgeschwindigkeit des
Mischwerkzeugs liegt in einem Bereich von etwa 2 bis 35 m/s. Es wird ein Vakuum von ca. ≤ 150 mbar angelegt und das Material und der Füllstoff verbleiben für eine mittlere Verweilzeit von etwa 10 min bis 200 min im Reaktor bevor sie verdichtet werden. Bei diesen Werten handelt es sich allerdings nur um grobe Richtwerte.

Dadurch werden der hydrolytische Abbau, sowie der oxidative Abbau des Polykondensats hintangehalten und ein Zusammenkleben des Polymers verhindert. Wesentlich ist, dass der Kunststoff bei der Mischung mit dem Füllstoff noch nicht aufgeschmolzen ist, d.h. dass der Füllstoff nicht in die Schmelze zugegeben wird. Gleichzeitig erfolgt eine intensive Durchmischung zwischen Füllstoff und Polymer bzw. eine Vorhomogenisierung, wodurch eine nachfolgenden Extrusion erleichtert und das Endprodukt qualitativ besser wird.

Es hat sich durch Versuche gezeigt, dass auf diese Weise und durch diese erfindungsgemäße Verfahrensführung auf eine Vortrocknung der Füllstoffe gänzlich verzichtet werden kann, und auch rohe, nicht vorgetrocknete Füllstoffe ohne jegliche aufwändige und kostenintensive thermische Vorbehandlung einsetzbar sind, was erhebliche wirtschaftliche Vorteile bringt und auch die Verfahrensführung beschleunigt bzw. die Gesamtdauer des Verfahrens verkürzt. Die Trocknung des Polymers und des Füllstoffes erfolgt vorteilhafterweise gleichzeitig in einem gemeinsamen Schritt. Zumindest der Verfahrensabschnitt der Erzeugung der fertigen Endmischung von Polymer und Füllstoff bzw. eines Masterbatches kann dadurch deutlich vereinfacht und beschleunigt werden.

Auch ist bei Verwendung eine teuren vorgetrockneten Füllstoffes die logistische Behandlung schwieriger, da derartige Füllstoffe in eigenen Trockenluft-beschleierten Silos gelagert werden müssen

Außerdem ist man bei der erfindungsgemäßen Verfahrensführung nicht auf den Einsatz von teuren gecoateten bzw. beschichteten Füllstoffen angewiesen, sondern es können die rasch verfügbaren und preiswerten Rohfüllstoffe eingesetzt werden, solange die Verfahrensbedingungen eingehalten werden.

Das erfindungsgemäße Verfahren weist also mehrere praxisrelevante Vorteile gegenüber bekannten Verfahren auf.

Weitere vorteilhafte Ausgestaltungen des Verfahrens sind durch die Merkmale der abhängige Ansprüche gegeben:
So kann als Füllstoff zumindest ein inertes pulverförmiges Mineral, beispielsweise Kaoline, Silikate, Titandioxid, vorzugsweise Calciumcarbonat CaCO₃, eingesetzt werden, die gute technische Eigenschaften im Endprodukt liefern

Als Füllstoff kann vorteilhafterweise auch ein nicht oberfächenbehandelter bzw. unbeschichteter Füllstoff eingesetzt wird, ohne dass dies zu einem relevanten hydrolytischen Abbau führt, woduch sich die oben bereits beschriebe Kostenreduktion ergibt.

Vorteilhafterweise wird ein Füllstoff mit einer mittleren Korngröße bzw. einem D 50 Wert von weniger als 50 µm, insbesondere zwischen 2 und 15 µm, eingesetzt.

Auch kann vorteilhafterweise ein Füllstoff mit einer spezifischen Oberfläche von 2 bis 11 m²/g, insbesondere 5 bis 9 m²/g, eingesetzt werden, wobei die an dieser vergrößerten Oberfläche gebundene höhere Menge an Feuchtigkeit, ebenfalls für das erfindungsgemäße Verfahren nicht nachteilig ist.

Gemäß einer vorteilhaften Verfahrensführung liegt das Polymermaterial zum Zeitpunkt der Zugabe von zumindest einer Teilmenge, insbesondere der gesamten Menge, des Füllstoffs in einem erweichten Zustand vor bzw. weist eine Temperatur von über 30°C unterhalb seines VICAT-Erweichungspunktes (10 N), jedoch noch unterhalb, etwa um 5°C, seines Schmelzpunktes, auf. Dadurch klebt der Füllstoff gut an der Oberfläche der Polymerflakes und kann sich gut und homogen verteilen. Der VICAT-Erweichungspunkt wird gemäß ASTM DIN 1525; ISO 306, "A" bestimmt. Die Hersteller geben für die Polymere meist die Werte an.

Für das erfindungsgemäße Verfahren ist eine milde, aber stetige Bewegung des, gegebenenfalls bereits mit Füllstoff gefüllten, Polymer-Materials vorteilhaft. Dadurch wird das Verklumpen bzw. Verkleben des Materials im kritischen Temperaturbereich verhindert, bis eine ausreichende Kristallisierung der Oberfläche der Teilchen das Zusammenkleben der einzelnen Teilchen selbst verhindert. Außerdem ist durch die Bewegung eine höhere Prozesstemperatur möglich. Im Behandlungsbehälter bzw. Schneidverdichter wird bei der milden und stetigen Bewegung neben dem Hinanhalten von Verklebungen gleichzeitig dafür gesorgt, dass die Temperatur im Behälter ausreichend hoch wird bzw. bleibt und jedes Teilchen schonend auf die entsprechende Temperatur erwärmt wird bzw. beibehält. Dadurch wird der Füllstoff auch innig mit dem Polymer gemischt und vom Polymer, insbesondere von dessen weichen Randbereichen, aufgenommen. Gleichzeitig wird durch die Bewegung eine Ablösung der migrierenden Moleküle von der Oberfläche der Teilchen unterstützt. Zu diesem Zwecke kommen vorteilhafterweise Werkzeuge auf unterschiedlichen Ebenen des Behälters bei kontinuierlichen Prozessen bzw. Mischwerkzeuge bei Batch-Prozessen zum Einsatz. Es ist nicht entscheidend, wie die Temperatur in das Material eingebracht wird. Dies kann in einem vorgelagerten Prozess stattfinden oder im Behandlungsbehälter stattfinden. Vorteilhafterweise geschieht dies jedoch durch die sich drehenden Mischwerkzeuge selbst.

Eine effiziente Trocknung des Kunststoffmaterials wird durch Vakuumunterstützung erreicht. Ein auf diese Weise geführtes Verfahren benötigt durch den Einsatz von Vakuum auch einen deutlich geringeren Energieeinsatz als vergleichbare Systeme. Die Füllstoffe werden gleichzeitig mit dem Polymer effektiv von der Rechtfeuchte befreit. Das anliegende Vakuum unterstützt auch den Diffusionsprozess der Verschmutzungen aus dem Material und es sorgt auch für die Abführung derselbigen bzw. einer Dekontamination des Polymers. Weiters schützt das Vakuum die heißen Polymerteilchen bzw. Flakes auch vor oxidativen Einflüssen bzw. Schädigungen, wodurch auch eine höhere Viskosität im Vergleich zu anderen Anlagensystemen erreichbar ist. Grundsätzlich wäre die Entgiftung auch mit jedem inerten Gas möglich. Dies ist aber mit deutlich höheren Kosten verbunden.

Die Trocknung wird durch eine bestimmte vorteilhafte Mindestverweilzeit des Materials bei der eingestellten Temperatur und dem ausgewählten Vakuum unterstützt.

Eine entsprechende Verweilzeit stellt sicher, dass eine Mindestreinigung des Materials erfolgt und richtet sich nach unterschiedlichen Kriterien, nämlich der Diffusionsgeschwindigkeit der Migrationsprodukte im entsprechenden Polymer und der Erweichungs- bzw. Schmelztemperatur des Polymers.

Grundsätzlich kann das erfindungsgemäße Verfahren in einem Batch-Prozess oder kontinuierlich ablaufen. Es soll vorteilhafterweise nur sichergestellt werden, dass die verfahrenstechnischen Parameter, wie Temperatur, Verweilzeit und Vakuum über die gesamte Zeit eingehalten wird. Ein kontinuierlicher Prozess hat sich als besonders zweckmäßig erwiesen, um einen gleichmäßigen Produktionsablauf zu gewährleisten.

Die Füllstoffe werden vorteilhafterweise mit einer derartigen Restfeuchte und in einer derartigen Menge eingesetzt, dass die innere Feuchte im Gesamtsystem bzw. die Feuchte der Mischung aus Füllstoff und Polymer weniger als 100 ppm beträgt. Bei einer derartigen Restfeuchte hält sich der Abbau in tolerierbaren Grenzen. Füllstoffe werden üblicherweise in einem weiten Bereich bis ca. 80 Gew%, gemessen am Gesamtgewicht der Mischung, zugegeben.

Wird die Mischung bzw. das Polymer deutlich unter eine Restfeuchte im Gesamtsystem von 100 ppm getrocknet und das Material für eine entsprechende Zeit, ca. 1 h, und bei entsprechender Temperatur, ca. <200°C, im Reaktor gehalten, kann damit sogar eine Erhöhung der Viskosität erreicht werden. weitere Beschreibung der Erfindung:
Das erfindungsgemäße Verfahren kann mit verschiedenen Vorrichtungen durchgeführt werden: Die in den Druckschriften EP 123 771, EP 0 390 873, AT 396 900, AT 407 235, AT 407 970, AT 411 682, AT 411 235, AT 413 965, AT 413 673 oder AT 501 154 genau und spezifisch beschriebenen Vorrichtungen werden mitsamt all ihren vorteilhaften Ausgestaltungen in die vorliegende Offenbarung aufgenommen und stellen einen integralen Bestandteil der Offenbarung dar. Derartige Vorrichtungen werden auch in der Praxis eingesetzt und sind beispielsweise als "Erema Kunststoff Recycling System PC" oder als "ein- oder zweistufige Vacurema-Anlagen" bekannt.

Je nach den verwendeten Eindosierungspunkten des Füllstoffes zum Polymer können unterschiedliche Qualitäten hinsichtlich Mischungsgrad, Viskosität und Füllgrad erreicht werden. Es kann auch zielführend sein, mehrere Eindosierungspunkte zu verwenden, um z. B. die Feuchtebelastung für einen Behandlungsschritt zu minimieren. Um sehr hohe Füllgrade zu erreichen kann es ebenso helfen, an mehreren Dosierpunkten gleichzeitig Füllstoff einzudosieren.

In Versuchen haben sich verschiedene Varianten bewährt, wie das Verfahren zum Füllen eines hygroskopischen und gegen hydrolytischen Abbau empfindlichen thermoplastischen Polykondensats, insbesondere PET, geführt werden kann:
So kann die Eindosierung von Füllstoff in den Einzugsbereich eines Extruders erfolgen. Das Vakuum des dem Extruder vorgeschafteten Reaktors wirkt bis in die Schnecke des Extruders. Dort sind die Kunststoffflakes noch nicht vollständig aufgeschmolzen. Der pulverförmige, nicht vorgetrocknete Füllstoff wird verteilt und die Mischung unter Zuhilfenahme von Vakuum und Temperatur getrocknet. Die Verweilzeit bis zur Schmelze ist zwar relativ kurz, wird aber durch die höhere Temperatur teilweise kompensiert. Die Feuchte kann minimiert werden und damit auch der negative Einfluss auf das Polykondensat. Das Polykondensat kann in den vorgelagerten Verarbeitungschritten entsprechend getrocknet, kristallisiert und fallweise durch geeignete Wahl der Temperatur und der Verweilzeiten in seiner Viskosität sogar erhöht werden.

Diese Art der Beschickung mit nicht vorgetrocknetem Füllstoff kann auch in Kombination mit den folgenden, weiter unten angeführten Verfahren angewendet werden, insbesondere um sehr hohe Füllgrade zu erreichen.

Eine weitere vorteilhafte Methode besteht darin, dass die Eindosierung der Füllstoffe in einen Reaktor bzw. Schneidverdichter erfolgt. Das erfindungsgemäße Verfahren zur Beimengung der Füllstoffe und zur Vorbehandlung, Aufarbeitung bzw. Recyclierung des Polykondensats in all seinen vorteilhaften Ausgestaltungen wird üblicherweise in einem Aufnahmebehälter bzw. Reaktor durchgeführt. Das zu behandelnde Kunststoffmaterial, das üblicherweise in Form von zumindest teilweise kristallisiertem oder nicht kristallisiertem bzw. amorphem Granulat, als Neuware oder als Regenerat vorliegt, wird in diesem Aufnahmebehälter bzw. Reaktor vorgelegt und unter ständiger Mischung bzw. Bewegung und/oder Zerkleinerung bei erhöhter Temperatur behandelt. Zur Mischung und Erwärmung des Kunststoffmaterials ist im Reaktor zumindest ein, gegebenenfalls auf mehreren übereinanderliegenden Ebenen angeordnetes, um eine vertikale Achse drehbares Zerkleinerungs- bzw. Mischwerkzeug, mit auf das Gut zerkleinernd und/oder mischend einwirkenden Arbeitskanten, angeordnet. Durch diese Zerkleinerungs- bzw. Mischwerkzeuge wird das Polymermaterial mit mechanischer Energie beaufschlagt, wodurch eine Erwärmung und eine gleichzeitige Mischung und Bewegung des Polymer-Materials erfolgt. Die Erwärmung erfolgt dabei durch Umwandlung der beaufschlagten mechanischen Energie bzw. durch Reibung. Derartige Reaktoren werden auch in der Praxis eingesetzt und sind beispielsweise als Erema Kunststoff Recycling System PC oder als ein- oder zweistufige Vacurema-Anlagen bekannt.

Die Aufarbeitung erfolgt bei einer Temperatur unterhalb der Schmelztemperatur und vorzugsweise über der Glasübergangstemperatur, des Kunststoffmaterials, wobei das Polymermaterial gleichmäßig und stetig bewegt und durchmischt wird. Dadurch wird das Kunststoffmaterial in einem Schritt kristallisiert, getrocknet und gereinigt.

Die Zudosierung des Füllstoffes erfolgt im oberen Drittel des Reaktors. Dies ermöglicht eine ausreichende Verweilzeit, die zur Trocknung und Vermischung des Füllstoffes mit den Flakes genutzt werden kann. Es ist sowohl einen Eindosierung über als auch unter dem obersten Materiallevel möglich. Die Eindosierung unter dem obersten ist bevorzugt.

Der Vorteil liegt auch hier in der leichten Verarbeitung von zwei oder mehr Stoffströmen, die nicht vorbehandelt werden müssen. Weder der Füllstoff noch das Polykondensat muss entsprechend vorbehandelt oder vorgetrocknet werden. Beide Stoffströme werden kontinuierlich in den Reaktor eingebracht und in einem kontinuierlichen Prozess getrocknet bzw. behandelt und dem nachfolgenden Extruder zugeführt.

Das erfindungsgemäße Verfahren kann gemäß einer weiteren Methode in vorteilhafter Weise in einer entsprechend dafür ausgestalteten Vorrichtung auch zweistufig geführt werden. So kann beispielsweise eine Mischung aus kristallisierten und nichtkristallisierten Granulaten oder Flakes als zu reinigendes Material im Kristallisationstrockner eines zweistufigen Vacurema Reaktors vorgelegt werden.

Bei dieser Verfahrensführung erfolgt eine zweistufige Behandlung des anfallenden bzw. aufgegebenen Polykondensats, wobei im Zuge der Vorbehandlung in der Vorbehandlungseinrichtung keine Plastifizierung des Gutes, jedoch eine Kristallisierung und/oder eine gewisse Vorverdichtung bei gleichzeitiger Trocknung unter Vakuum erfolgt. Die Vorverdichtung wird bei entsprechender Temperatur durch mechanische Beaufschlagung bzw. Energieeinbringung in das Gut bewirkt. Insbesondere erfolgt die Erhöhung bzw. Einstellung der Temperatur durch die mechanische Beaufschlagung des Gutes bzw. durch Umwandlung der Rotationsenergie zumindest eines Misch- und/oder Zerkleinerungselementes in thermische Energie aufgrund der auftretenden Reibungsverluste.

Im Zuge der Hauptbehandlung in der Hauptbehandlungseinrichtung wird das Gut bei, insbesondere erhöhter, Temperatur - die Temperatur kann geringer als in der Vorbehandlungseinrichtung oder gleich sein - weiter getrocknet, entgiftet und wenn nötig kristallisiert und unter hohem Vakuum für eine bestimmte mittlere Verweilzeit gehalten. Wiederum erfolgt eine mechanische Beaufschlagung bzw. Materialverdichtung und Einbringung von Energie mittels zumindest eines Misch- bzw. Zerkleinerungselementes, das aufgrund seiner Rotation die entsprechende thermische Energie in das Gut einbringt und dieses weiter erwärmt. Die Hauptbehandlung, die unter Vakuum erfolgt, verringert die Restfeuchte auf einen vorgegebenen bestimmten mittleren Wert und bewirkt auch, dass flüchtige Schadstoffe aus dem Gut abgeschieden werden. Die Temperatur bei der Hauptbehandlung wird unter der Schmelztemperatur des Gutes gehalten. Es ist jedoch anzustreben, diese Temperatur möglichst hoch anzusetzen.

Die Eindosierung des Füllstoffes erfolgt dabei im Kristallisationstrockner. Grundsätzlich sind alle Beschickungspositionen möglich, z.B oben, in der Mitte oder unten. Beim Einsatz von nicht oberflächenbehandeltem Calciumcarbonat, das somit eine vergrößerte Oberfläche hat und somit auch die Möglichkeit mehr Feuchte aufzunehmen, ist die Eindosierung im oberen Drittel sinnvoll, um die Verweilzeit hoch zu halten und eine entsprechende Trocknung zu erreichen. Bei dieser Version dient der zweite Hauptreaktorbehälter als eine weitere Trocknungs- und Mischstufe für den Füllstoff und das Polymer.

Bei diesem Verfahren werden sowohl der Kristallisationstrockner als auch die Hauptbehandlungseinrichtung kontinuierlich betrieben.

Eine weitere Variante besteht darin, dass zwei parallele, einem Schneidverdichter als Hauptbehandlungseinrichtung vorgeschaltete, Kristallisationstrockner im Batchbetrieb betrieben werden. In diesem Fall wird eine komplette Mischung von Polymer und Füllstoff in einen Behälter eingefüllt, unter Vakuum erwärmt, getrocknet kristallisiert, gemischt usw. Nach einer definierten Batchzeit wird das behandelte Material in die Hauptbehandlungseinrichtung übergeben. Es kann aber auch an einen Fremdextruder unter Trockenluftbedingungen übergeben werden. Der Vorteil bei einem Batchprozess sind die sehr exakten Mischungsverhältnisse oder Trockenbedingungen, die eingestellt werden können. Es kann auch die Prozesszeit nach Temperaturen, Abluftfeuchte und/oder Mischzeit angepasst werden. Da die Befüllung der Kristallisationstrockner unter Normalatmosphäre erfolgt, ist die Beschickung mit Kunststoff und/oder Füllstoff unproblematisch. Es ist keine Vorevakuierung für die Beschickung nötig.

Bei all diesen Verfahren wird das gefüllte Kunststoffmaterial abschließend plastifiziert bzw. aufgeschmolzen und dabei, gegebenenfalls nach einer Filterung, insbesondere unter Vakuumbedingungen, z.B. einem Extruder zugeführt bzw. zu Granulat verarbeitet.

Weiters ist erfindungsgemäß die besondere Verwendung eines Füllstoffes vorgesehen. Diese Verwendung richtet sich in ihren vorteilhaften Ausgestaltungen nach den Verfahrensschritten der abhängigen Verfahrensansprüche.

Die Einbringung von Dispergierhilfsmittel ist eine weitere Möglichkeit um hohe Füllstoffanteile zu erreichen. Diese können entweder mit dem Füllstoff eingebracht werden, separat im gleichen Prozessschritt oder auch in einem vorgelagerten Prozessschritt. Diese Dispergierhilfsmittel führen zu einer Benetzung der PET Oberfläche. An dieser Oberfläche haftet in weiterer Folge das Pulver. Es ist selbstredend, dass dieser Effekt um so besser funktioniert, als die Oberfläche der PET Flakes zum Volumen zunimmt. Da immer dünnere PET Flaschen produziert werden, um Material zu sparen kommt dieser Trend der Effektivität der Einhomogenisierung entgegen. Dispergierhilfsmittel können beispielsweise ölige, wachsartige, leicht klebrige Substanzen sein.

Das erfindungsgemäße Verfahren wird im folgenden anhand von nicht einschränkenden vorteilhaften Ausführungsbeispielen detailliert dargestellt:

### Beispiel 1:

Polyethylenterephthalat (PET), in Form von Flakes aus zerkleinerten Gebinden, wird im Schneidverdichter auf eine Temperatur von 110° bis 240°C, vorzugsweise 130° bis 210°C, erwärmt. Ein nicht vorgetrockneter Füllstoff, nämlich Calciumcarbonat CaCO₃ wird von oben, bevorzugt unter das Materiallevel, zudosiert. Die Umfangsgeschwindigkeit der äußersten Rührspitze des Zerkleinerungs- bzw. Mischwerkzeugs liegt in einem Bereich von 2 bis 35 m/s, vorzugsweise 3 bis 20 m/s. Es wird ein Vakuum von ≤ 150 mbar, vorzugsweise ≤ 50 mbar, insbesondere ≤ 20 mbar, insbesondere zwischen 0,1 bis 2 mbar, angelegt. Das PET-Material und der Füllstoff verbleiben für eine mittlere Verweilzeit von 10 min bis 200 min, insbesondere von 40 min bis 120 min, im Reaktor, werden dann im unteren Bereich abgezogen und einem Extruder zugeführt, der die Mischung verdichtet und aufschmilzt.

### Beispiel 2:

Gewaschenes Polyester-Mahlgut aus Getränkeflaschen, transparent, keine Verschmutzung, mit einer Schüttdichte von 325 kg/m³, einer mittleren Feuchte von 3500 ppm und einer mittleren intrisischen Viskosität von 0,74 dl/g, wird in einen Schneidverdichter der Marke Vacurema® Basic 1108 eingebracht. Die mittlere Vorbehandlungstemperatur der Materialmischung beträgt etwa 200°C, bei einem Vakuum von etwa 6 mbar. In Inneren des Behälters rotierten Misch- bzw. Rührwerkzeuge. Die Misch- bzw. Rührwerkzeuge wirken auf das Material zerkleinernd und sorgen gleichzeitig dafür, dass das Material durch Reibung erwärmt wird. Im Schneidverdichter wird dadurch eine Mischthrombe ausgebildet, wobei ein vertikaler Gradient entsteht. Die Flakes durchwandern den Schneidverdichter mit einer gewissen Verweilzeit. Das Material im oberen Bereich ist eher gröber und kühler, das Material im unteren Bereich weicher und kleinstückiger. Durch die ständige Bewegung wird ein Verklumpen des Materials verhindert und die Polymerflakes bleiben ständig frei fließend.

Weiters ist am Schneidverdichter eine Pulverdosiereinrichtung angeordnet. Damit wird gecoatetes CaCO3, mit einer Schüttdichte von 655 kg/m³ und einer mittleren Feuchte von 1280 ppm zugegeben. Es erfolgt eine Eindosierung von 25% CaCO3 in pulvriger Form in das PET Mahlgut und zwar in einen unteren Bereich des Behälters, in dem das Material bereits in einem erweichten Zustand vorliegt. Alternativ kann die Zugabe auch von oben erfolgen. Der Füllstoff wird auf diese Weise mit dem erweichten Material innig und homogen vermischt und die Mischung anschließend im Extruder aufgeschmolzen, gegebenenfalls entgast, filtriert und granuliert.

Der Extruder ist an den Schneidverdichter in dessen unteren Bereich angeschlossen. Die Mischwerkzeuge fördern das erweichte Material in den Einzugsbereich des Extruders, der bei einer Schneckendrehzahl von 145 U/min, einem Durchsatz von 300 kg/h, einer Schmelzetemperatur von 295 °C und einer filtration von 50/250 mesh betrieben wird.

### Beispiel 3:

Dieses Ausführungsbeispiel läuft analog zu Beispiel 2 mit geringfügigen Abweichungen und zwar:
Gewaschenes Polyester-Mahlgut aus Getränkeflaschen, transparent, keine Verschmutzung, mit einer Schüttdichte von 390 kg/m³, einer mittleren Feuchte von 6500 ppm und einer mittleren intrisischen Viskosität von 0,75 dl/g, wird in einen Schneidverdichter der Marke Vacurema® Basic 1108 eingebracht. Die mittlere Vorbehandlungstemperatur der Materialmischung beträgt etwa 195°C, bei einem Vakuum von etwa 7,1-12 mbar.

Weiters wird nicht gecoatetes CaCO3, mit einer Schüttdichte von 820 kg/m³ und einer mittleren Feuchte von 3280 ppm zugegeben. Es erfolgt eine Eindosierung von 22% CaCO3 in pulvriger Form in das PET Mahlgut.

Der Extruder wird bei einer Schneckendrehzahl von 120 U/min, einem Durchsatz von 294 kg/h, einer Schmelzetemperatur von 299 °C und einer Filtration von 50/250 mesh betrieben.

Auf diese Weise werden qualitativ hochwertige, blasenfreie Endprodukte enthalten.

## Patentansprüche

1. Verfahren zur Herstellung eines, mit zumindest einem Füllstoff, vorzugsweise Calciumcarbonat CaCO₃, gefüllten, gegen hydrolytischen Abbau empfindlichen und gegebenenfalls hygroskopischen, thermoplastischen, durch Polykondensation hergestellten Polymermaterials, insbesondere PET, wobei unter Vakuumbedingungen, ständigem Rühren bzw. Durchmischen und erhöhter Temperatur eine Mischung aus noch nicht aufgeschmolzenem, gegebenenfalls erweichtem, Polymermaterial mit dem Füllstoff hergestellt wird, wobei dafür ein zum Zugabezeitpunkt nicht vorgetrockneter Füllstoff mit einer Restfeuchte (H₂0) von mehr als 500 ppm, insbesondere mehr als 1000 ppm, eingesetzt wird.

2. Verfahren nach Anspruch 1, **dadurch gekennzeichnet, dass** als Füllstoff zumindest ein inertes pulverförmiges Mineral, beispielsweise Kaoline, Silikate, Titandioxid, vorzugsweise Calciumcarbonat CaCO₃, eingesetzt wird.

3. Verfahren nach Anspruch 1 oder 2, **dadurch gekennzeichnet, dass** als Füllstoff ein nicht oberflächenbehandelter bzw. unbeschichteter Füllstoff eingesetzt wird.

4. Verfahren nach einem der Ansprüche 1 bis 3, **dadurch gekennzeichnet, dass** als Füllstoff ein Füllstoff mit einer mittleren Korngröße bzw. einem D 50 Wert von weniger als 50 um, insbesondere zwischen 2 und 15 µm, und/oder mit einer spezifischen Oberfläche von 2 bis 11 m²/g, insbesondere 5 bis 9 m²/g, eingesetzt wird.

5. Verfahren nach einem der Ansprüche 1 bis 4, **dadurch gekennzeichnet, dass** das Polymermaterial zum Zeitpunkt der Zugabe von zumindest einer Teilmenge, insbesondere der gesamten Menge, des Füllstoffs in einem erweichten Zustand vorliegt bzw. eine Temperatur von über 30°C unterhalb seines VICAT-Erweichungspunktes (10 N), jedoch noch unterhalb seines Schmelzpunktes, aufweist.

6. Verfahren nach einem der Ansprüche 1 bis 5, **dadurch gekennzeichnet, dass** das zu behandelnde bzw. das, gegebenenfalls bereits mit dem Füllstoff versetzte, Kunststoffmaterial in zumindest einem evakuierbaren Aufnahmebehälter bzw. Reaktor unter ständiger Mischung bzw. Bewegung und/oder Zerkleinerung bei einer Temperatur unterhalb der Schmelztemperatur, vorzugsweise über der Glasübergangstemperatur, des Kunststoffmaterials, erwärmt und dadurch gleichzeitig, insbesondere in einem Schritt, kristallisiert, getrocknet und/oder gereinigt wird, wobei zur Mischung und/oder Erwärmung des Kunststoffmaterials, insbesondere auf eine Temperatur von 70° bis 240°C, vorzugsweise 130° bis 210°C, zumindest ein, gegebenenfalls auf mehreren übereinanderliegenden Ebenen angeordnetes, insbesondere um eine vertikale Achse, drehbares Zerkleinerungs- bzw. Mischwerkzeug, mit auf das Gut zerkleinernd und/oder mischend einwirkenden Arbeitskanten, eingesetzt wird, wobei die Erwärmung insbesondere durch Beaufschlagung mit mechanischer Energie erfolgt, wobei die Bearbeitung vorzugsweise unter einem Vakuum von s 150 mbar, vorzugsweise ≤ 50 mbar, insbesondere ≤ 20 mbar, insbesondere zwischen 0,1 bis 2 mbar, erfolgt und die Kunststoffmaterialien insbesondere für eine mittlere Verweilzeit von 10 min bis 200 min, insbesondere von 40 min bis 120 min, im Reaktor verbleiben.

7. Verfahren nach einem der Ansprüche 1 bis 6, **dadurch gekennzeichnet, dass** das Verfahren einstufig in einem einzigen Reaktor oder im Einzugsbereich eines Extruders geführt wird bzw. dass das, gegebenenfalls bereits mit dem Füllstoff versetzte, Kunststoffmaterial in einem einzigen Arbeitsgang, insbesondere in einem einzigen Reaktor, erwärmt, getrocknet, kristallisiert und gereinigt wird und/oder dass das Verfahren mit oder ohne Vortrocknung und/oder mit oder ohne Vorkristallisation des Kunststoffmaterials durchgeführt wird.

8. Verfahren nach einem der Ansprüche 1 bis 7, **dadurch gekennzeichnet, dass** das Verfahren mehrstufig, insbesondere zweistufig, geführt wird, wobei zwei oder mehr Aufnahmebehälter bzw. Reaktoren in Serie und/oder parallel angeordnet werden und das zu verarbeitende, gegebenenfalls bereits mit dem Füllstoff versetzte, Kunststoffmaterial diese Behälter der Reihe nach durchläuft, wobei vorzugsweise die Verfahrensbedingungen gemäß den vorangehenden Ansprüchen, für zumindest einen, insbesondere für den zuerst beschickten Behälter bzw. für die Vorbehandlung, angewendet werden, wobei das Kunststoffmaterial vorzugsweise in einer vorgelagerten Vorbehandlung auf eine Temperatur, insbesondere nahe der Prozesstemperatur der Hauptbehandlung, gebracht wird.

9. Verfahren nach Anspruch 8, **dadurch gekennzeichnet, dass** das Kunststoffmaterial in der ersten Stufe einer Vorbehandlung, insbesondere unter Vakuumbedingungen, durch Beaufschlagung mit mechanischer Energie unterworfen und dadurch erwärmt und bei erhöhter Temperatur getrocknet und gegebenenfalls gleichzeitig kristallisiert wird, und dass anschließend in einer einem allfälligen Plastifizieren bzw. Aufschmelzen vorangehenden zweiten Stufe eine Hauptbehandlung des Kunststoffmaterials erfolgt, bei der das Kunststoffmaterial, insbesondere unter Vakuumbedingungen, erneut durch Beaufschlagung mit mechanischer Energie unter Bewegung getrocknet und weiter kristallisiert wird, wobei diese Hauptbehandlung insbesondere bei einer gegenüber der Vorbehandlung erhöhten Temperatur erfolgt, wobei die Temperatur der Hauptbehandlung insbesondere unter der Plastifizierungstemperatur bzw. Schmelztemperatur des Kunststoffmaterials gehalten wird.

10. Verfahren nach einem der Ansprüche 1 bis 9, **dadurch gekennzeichnet, dass** das Kunststoffmaterial in kontinuierlichem Strom der Vorbehandlung unterzogen wird und/oder dass das Verfahren kontinuierlich oder diskontinuierlich bzw. als Batch-Prozess geführt wird.

11. Verfahren nach einem der Ansprüche 1 bis 10, **dadurch gekennzeichnet, dass** die Füllstoffe mit einer derartigen Restfeuchte und in einer derartigen Menge eingesetzt werden, dass die Feuchte im Gesamtsystem bzw. die Feuchte der Mischung weniger als 100 ppm beträgt.

12. Verfahren nach einem der Ansprüche 1 bis 11, **dadurch gekennzeichnet, dass** die Mischung nach erfolgter Aufbereitung abschließend gegebenenfalls einem Verdichtungsschritt, insbesondere einem Aufschmelzen bzw. einer Extrusion, unterzogen wird.

13. Verwendung von zumindest einem zum Zugabezeitpunkt nicht vorgetrockneten Füllstoff, vorzugsweise Calciumcarbonat CaCO₃, mit einer Restfeuchte von mehr als 500 ppm, zur Herstellung eines mit diesem Füllstoff gefüllten, gegen hydrolytischen Abbau empfindlichen und gegebenenfalls hygroskopischen, thermoplastischen, durch Polykondensation hergestellten Polymermaterials, insbesondere PET, gemäß dem Verfahren nach einem der Ansprüche 1 bis 12, wobei, insbesondere in einem beheiz- und evakuierbaren Schneidverdichter mit Misch- bzw. Zerkleinerungswerkzeugen, unter Vakuumbedingungen, ständigem Rühren bzw. Durchmischen und erhöhter Temperatur eine Mischung aus noch nicht aufgeschmolzenem, gegebenenfalls erweichtem, Polymermaterial mit dem Füllstoff hergestellt wird und wobei die Mischung abschließend gegebenenfalls einem Verdichtungsschritt unterzogen wird.

## Claims

1. A method for the production of a thermoplastic polymer material filled with at least one filler, preferably calcium carbonate CaCO₃, being sensitive to the hydrolytic decomposition, and optionally being hygroscopic, produced by means of polycondensation, in particular PET, wherein under vacuum conditions, constant stirring, or mixing, respectively, and increased temperature, a mixture is produced from not yet molten, optionally softened, polymer material together with the filler, wherein for this purpose a filler, which is not yet pre-dried at the time of addition, having a residual moisture content (H₂O) of more than 500 ppm, in particular more than 1000 ppm, is utilized.

2. The method according to claim 1, **characterized in that** at least one inert mineral in powder form, such as Kaolin, silicate, titanium dioxide, preferably calcium carbonate Ca CO₃, is utilized as the filler.

3. The method according to claims 1 or 2, **characterized in that** a non-surface-treated, or uncoated filler is utilized as the filler.

4. The method according to one of the claims 1 to 3, **characterized in that** a filler having an average grain size, or a D 50 value, of less than 50 µm, in particular between 2 and 15 µm, and/or having a specific surface of 2 to 11 m²/g, in particular 5 to 9 m²/g, is utilized as the filler.

5. The method according to one of the claims 1 to 4, **characterized in that** the polymer material is present in a softened state at the time of the addition of at least a partial amount, in particular the total amount, of the filler, or has a temperature of more than 30°C below its VICAT softening point (10 N), however, still below its melting point.

6. The method according to one of the claims 1 to 5, **characterized in that** the plastic material to be treated, or the plastic material already including the filler, is heated in at least one receptacle or reactor, which may be evacuated, under continuous mixing or moving, and/or crushing, at a temperature below the melting temperature, preferably one above the glass transition temperature, of the plastic material, and is thereby simultaneously, in particular in one step, crystallized, dried, and/or cleaned, wherein for the mixing and/or heating of the plastic material, in particular to a temperature of 70° to 240°C, preferably 130° to 210°C, at least one crushing or mixing tool is arranged in the reactor, optionally on multiple successively positioned levels, which is rotatable about a vertical axis, having working edges engaging in the product in a crushing and/or mixing manner is utilized, wherein heating is carried out by means of the impingement with mechanical energy, wherein processing is preferably carried out under a vacuum of ≤ 150 mbar, preferably ≤ 50 mbar, in particular ≤ 20 mbar, in particular between 0.1 to 2 mbar, and the plastic materials remain in the reactor, in particular for an average dwell time of 10 min to 200 min, in particular from 40 min to 120 min.

7. The method according to one of the claims 1 to 6, **characterized in that** the method is operated in one stage in a single reactor, or in the entry area of an extruder, and the plastic material, which optionally already includes the filler, is heated, dried, crystallized, and cleaned in a single process step, in particular in a single reactor, and/or the method is carried out with or without any pre-drying, and/or with or without any pre-crystallization of the plastic material.

8. The method according to one of the claims 1 to 7, **characterized in that** the method is operated in multiple stages, in particular in two stages, wherein two or more receptacles or reactors are arranged in series and/or in parallel, and the plastic material to be processed, which optionally already includes the filler, passes through these vessels in sequence, wherein preferably the process conditions are used according to the previous claims, for at least one vessel, in particular the one that was loaded first, or for the pre-treatment, wherein the plastic material is brought to a temperature, in particular to one upstream of the pre-treatment, in particular one close to the process temperature of the main treatment.

9. The method according to claim 8, **characterized in that** the plastic material, in a first step of a pre-treatment, in particular under vacuum conditions, is subjected to the impingement with mechanical energy, and is thereby heated, and dried at an increased temperature, and optionally simultaneously crystallized, and that subsequently, in an optional second step preceding the plasticizing or melting, a main treatment of the plastic material is carried out, in which the plastic material is again dried and further crystallized by means of the impingement with mechanical energy using movement, in particular under vacuum conditions, wherein said main treatment is carried out at a temperature that is increased as opposed to that of the pre-treatment, wherein the temperature of the main treatment is maintained, in particular at the plasticizing temperature, or the melting temperature of the plastic material.

10. The method according to one of the claims 1 to 9, **characterized in that** the plastic material is subject to the pre-treatment under a continuous flow, and/or the method is operated continuously, or discontinuously, or as a batch process.

11. The method according to one of the claims 1 to 10, **characterized in that** the fillers are utilized with such a residual moisture, and at such an amount that the moisture in the total system, or the moisture of the mixture, is less than 100 ppm.

12. The method according to one of the claims 1 to 11, **characterized in that** after completed processing, the mixture is finally subjected to an optional compacting step, in particular a melting or an extrusion.

13. A use of at least one filler that is not yet pre-dried at the time of addition, preferably calcium carbonate CaCO₃, having a residual moisture of not more than 500 ppm, for the production of a thermoplastic polymer material filled with said filler, preferably being sensitive to the hydrolytic decomposition, and optionally being hygroscopic, produced by means of polycondensation, in particular PET, according to the method according to one of the claims 1 to 12, wherein a mixture of not yet molten, optionally softened polymer material is produced using the filler, in particular in a cutting compactor having mixing or crushing tools, which may be heated and evacuated, under vacuum conditions, continuous stirring, or mixing, and increased temperature, and wherein the mixture, in a final step, is optionally subjected to a compacting step.

## Revendications

1. Procédé de fabrication d'un matériau polymère chargé d'au moins une charge, de préférence le carbonate de calcium CaCO₃, sensible à une dégradation hydrolytique et éventuellement hygroscopique, thermoplastique, fabriqué par polycondensation, dans lequel, dans les conditions d'un vide, sous agitation permanente ou mélange intime et à une température élevée, on fabrique un mélange du matériau polymère, non encore fondu, éventuellement ramolli, et de la charge, ce pour quoi on ajoute une charge, qui n'a pas été pré-séchée au moment de l'addition, ayant une humidité résiduelle (H₂O) supérieure à 500 ppm, en particulier supérieure à 1000 ppm.

2. Procédé selon la revendication 1, **caractérisé en ce qu'**on utilise en tant que charge au moins un minéral pulvérulent inerte, par exemple des kaolins, des silicates, du dioxyde de titane, de préférence du carbonate de calcium CaCO₃.

3. Procédé selon la revendication 1 ou 2, **caractérisé en ce qu'**on utilise en tant que charge une charge n'ayant pas subi de traitement superficiel, ou non revêtue.

4. Procédé selon l'une des revendications 1 à 3, **caractérisé en ce qu'**on utilise en tant que charge une charge ayant une granulométrie moyenne ou une valeur D₅₀ inférieure à 50 µm, en particulier comprise entre 2 et 15 µm, et/ou une aire spécifique de 2 à 11 m²/g, en particulier de 5 à 9 m²/g.

5. Procédé selon l'une des revendications 1 à 4, **caractérisé en ce que** le matériau polymère, à l'instant de l'addition d'au moins une quantité partielle, en particulier de la quantité totale de la charge, se présente dans un état ramolli, ou présente une température de plus de 30°C inférieure à son point de ramollissement de VICAT (10 N), mais encore inférieure à son point de fusion.

6. Procédé selon l'une des revendications 1 à 5, **caractérisé en ce que** le matériau plastique à traiter, ou le matériau plastique éventuellement déjà additionné de la charge, est, dans au moins un récipient récepteur ou réacteur dans lequel on peut faire le vide, sous mélange ou agitation et/ou broyage permanents, chauffé à une température inférieure à la température de fusion, de préférence supérieure à la température de transition vitreuse du matériau plastique, et **en ce que** simultanément, en particulier en une étape, on le cristallise, on le sèche et/ou on le purifie, ce à l'occasion de quoi, pour le mélange et/ou le chauffage du matériau plastique, en particulier à une température de 70 à 240°C, de préférence de 130 à 210°C, on utilise au moins un outil de broyage ou de mélange, éventuellement disposé sur plusieurs plans superposés, pouvant en particulier tourner autour d'un axe vertical, et présentant des arêtes de travail agissant de façon à broyer et/ou mélanger le produit, le chauffage ayant lieu en particulier par application d'une énergie mécanique, le traitement ayant lieu de préférence sous un vide ≤ 150 mbar, de préférence ≤ 50 mbar, en particulier ≤ 20 mbar, en particulier compris entre 0,1 et 2 mbar, et les matériaux plastiques restant dans le réacteur en particulier pendant un temps de séjour moyen de 10 min à 200 min, en particulier de 40 min à 120 min.

7. Procédé selon l'une des revendications 1 à 6, **caractérisé en ce que** le procédé est piloté en une étape dans un réacteur unique ou dans la zone d'alimentation d'une extrudeuse, ou que le matériau plastique, éventuellement déjà additionné de la charge, est, en une étape unique, en particulier dans un réacteur unique, chauffé, séché, cristallisé et purifié, et/ou que le procédé est mis en oeuvre avec ou sans pré-séchage et/ou avec ou sans pré-cristallisation du matériau plastique.

8. Procédé selon l'une des revendications 1 à 7, **caractérisé en ce que** le procédé est piloté en plusieurs étapes, en particulier en deux étapes, deux récipients récepteurs ou réacteurs, ou plus, étant disposés en série et/ou en parallèle, et le matériau plastique à mettre en oeuvre, éventuellement déjà additionné de la charge, passant successivement par ces récipients, de préférence les conditions du procédé étant utilisées selon les revendications précédentes, pour au moins un récipient, en particulier pour le premier récipient alimenté, ou pour le prétraitement, le matériau plastique étant, de préférence dans une unité de prétraitement montée en amont, porté à une température en particulier proche de la température de procédé du traitement principal.

9. Procédé selon la revendication 8, **caractérisé en ce que** le matériau plastique est, dans la première étape, soumis à un prétraitement, en particulier dans les conditions d'un vide, par application d'une énergie mécanique, et de ce fait est chauffé et est séché à une température élevée et éventuellement est simultanément cristallisé et **en ce qu'**ensuite, dans une deuxième étape, précédant une éventuelle plastification ou fusion, on procède à un traitement principal du matériau plastique, au cours duquel le matériau plastique est, en particulier dans les conditions d'un vide, de nouveau séché au cours de son déplacement par application d'une énergie mécanique et subit une cristallisation plus poussée, ce traitement principal ayant lieu en particulier à une température plus élevée que lors du prétraitement, la température du traitement principal étant maintenue en particulier en-dessous de la température de plastification ou de la température de fusion du matériau plastique.

10. Procédé selon l'une des revendications 1 à 9, **caractérisé en ce que** le matériau plastique est, en flux continu, soumis au prétraitement, et/ou que le procédé est piloté en continu ou d'une manière discontinue, ou sous forme d'un procédé par lots.

11. Procédé selon l'une des revendications 1 à 10, **caractérisé en ce que** les charges sont utilisées avec une humidité résiduelle et en une quantité telles que l'humidité dans le système total, ou l'humidité du mélange, soit inférieure à 100 ppm.

12. Procédé selon l'une des revendications 1 à 11, **caractérisé en ce que**, après le traitement, le mélange est finalement soumis éventuellement à une étape de consolidation, éventuellement à une fusion ou à une extrusion.

13. Utilisation d'au moins une charge, non pré-séchée à l'instant de son addition, de préférence le carbonate de calcium CaCO₃, ayant une humidité résiduelle supérieure à 500 ppm, pour fabriquer un matériau polymère chargé de cette charge, sensible à une dégradation hydrolytique et éventuellement hygroscopique, thermoplastique, fabriqué par polycondensation, par le procédé selon l'une des revendications 1 à 12, pour laquelle, dans un broyeur-compacteur pouvant être chauffé et dans lequel on peut faire le vide, comportant des outils de mélange ou de broyage, dans les conditions d'un vide, sous agitation ou mélange intime permanent et à haute température, on fabrique un mélange du matériau polymère non encore fondu, éventuellement ramolli, et de la charge, le mélange étant finalement soumis éventuellement à une étape de compactage.
